# EUROPÄISCHE PATENTSCHRIFT

(11) **EP 0 858 382 B1**
(45) Veröffentlichungstag und Bekanntmachung des Hinweises auf die Patenterteilung: **29.12.1999**
(21) Anmeldenummer: 96937311.7
(22) Anmeldetag: 31.10.1996
(51) Int. Cl.: B25F 5/02, F16F 15/123

(54) **IMPULSSCHRAUBER MIT EINER DÄMPFUNGSEINRICHTUNG ZWISCHEN GRIFFHÜLSE UND GEHÄUSE**
POWER SCREW DRIVER WITH DAMPING DEVICE BETWEEN COVERED GRIP AND HOUSING
TOURNEVIS A MOTEUR MUNI D'UN DISPOSITIF AMORTISSEUR SITUE ENTRE LA POIGNEE GAINEE ET LE BOITIER

(30) Priorität: 31.10.1995 DE 29517258 U
(43) Veröffentlichungstag der Anmeldung: 19.08.1998
(73) Patentinhaber: Cooper Power Tools GmbH & Co., 73463 Westhausen (DE)
(72) Erfinder: KETTNER, Konrad, D-73433 Aalen (DE)
(74) Vertreter: Grünecker, Kinkeldey, Stockmair & Schwanhäusser Anwaltssozietät
(86) Internationale Anmeldenummer: EP9604736
(87) Internationale Veröffentlichungsnummer: WO9716287

(56) Entgegenhaltungen:
- DE-A- 3 937 816
- DE-A- 4 143 218
- US-A- 2 907 239
- US-A- 3 952 545
- US-A- 4 140 446
- US-A- 4 341 475
- US-A- 4 950 110

## Beschreibung

Die Erfindung betrifft ein Werkzeug, insbesondere einen Impulsschrauber, mit einer in einem Gehäuse drehbar gelagerten, von einem Motor angetriebenen Abtriebswelle, welche im wesentlichen koaxial zu einer Gehäuselängsachse verläuft.

Ein solches Werkzeug ist beispielsweise aus der DE-C-3503032 oder DE-U-8310596 bekannt. In der DE-C-3503032 wird ein druckluftbetriebener Impulsschrauber offenbart, bei dem das im wesentlichen zylindrische Gehäuse gleichzeitig zum Halten des Werkzeugs dient. Die von einem Druckluftmotor angetriebene Abtriebswelle steht aus dem Gehäuse vor und dient zur Übertragung von Druckstößen auf anzuziehende oder zu lösende Schrauben, Muttern oder dergleichen.

Aus dem DE-U-8310596 ist ein tragbares Gerät zum Entgraten von Kanten schwer zugänglicher Bohrungen bekannt. Das entsprechende Gehäuse dient gleichzeitig als Griffrohr für das Werkzeug. Ein zugehöriger Motor ist in dem Gehäuse untergebracht und treibt eine Welle an, an derem aus dem Gehäuse vorstehenden Ende ein Werkzeugkopf zum Entgraten angeordnet ist.

Bei beiden vorbekannten Werkzeugen und insbesondere bei dem Impulsschrauber, treten Vibrationen und Druckstoßanregungen des gesamten Werkzeuges auf. Diese werden über das gleichzeitig als Griffstück dienende Gehäuse auf eine Hand eines Benutzers übertragen. Dadurch ergibt sich eine starke Beanspruchung der Hand und insbesondere des Handgelenks. Diese Beanspruchung wird dadurch verstärkt, daß der Benutzer aufgrund der Vibrationen das Werkzeug fest ergreifen muß, um dieses positionsgenau zu halten.

Der Erfindung liegt daher die Aufgabe zugrunde, ein Werkzeug der eingangs beschriebenen Art dahingehend zu verbessern, daß das Werkzeug mit geringem Krafteinsatz bequem und kontrolliert zu halten ist.

Diese Aufgabe wird im Zusammenhang mit den Merkmalen des Oberbegriffs des Anspruchs 1 dadurch gelöst, daß auf das Gehäuse eine relativ zu diesem drehbare Griffhülse aufgesteckt und zwischen diesen wenigstens eine einer pulsartigen Relativdrehung von Griffhülse zu Gehäuse entgegenwirkende Dämpfungseinrichtung angeordnet ist.

Die Relativdrehung von Griffhülse zu Gehäuse tritt nur bei durch Werkzeugvibrationen oder dergleichen pulsartig auf die Griffhülse übertragenen Stößen auf. Ein solcher Stoß und die damit verbundene pulsartige Relativdrehung von Griffhülse zu Gehäuse wird durch die dieser Drehung entgegenwirkende Dämpfungseinrichtung unterbunden oder zumindest abgeschwächt.

Eine solche Dämpfungseinrichtung kann stoßdämpferartig ausgebildet sein und beispielsweise pneumatisch oder hydraulisch funktionieren.

Bei einem bevorzugten Ausführungsbeispiel ist die Dämpfungseinrichtung mechanisch aufgebaut und weist wenigstens eine zwischen Gehäuse und Griffhülse festgelegte Druckfeder auf. In diesem Fall ist die Griffhülse nur über die Druckfeder verdrehsicher mit dem eigentlichen Werkzeug über das Gehäuse verbunden. Die Feder nimmt das entstehende Anfahr-Drehmoment des Motors voll auf und dämpft die Werkzeugvibrationen oder pulsartig auf die Griffhülse übertragenen Stöße.

Um die Festlegung der Druckfeder bezüglich Gehäuse und Griffhülse in einfacher Weise zu gestalten, weist jede Dämpfungseinrichtung zwei von Enden der Druckfeder beaufschlagte Anlagekörper auf, welche in Umfangsrichtung von Gehäuse und Griffhülse hintereinander angeordnet und jeweils mit beiden in Anlage sind. Dadurch werden das Anfahrdrehmoment, die Werkzeugvibrationen oder andere Stöße über die mit den Gehäuse in Anlage stehenden Anlagekörper auf die Druckfeder übertragen, wodurch diese gespannt wird und eine Rückstellkraft entgegengesetzt zur Relativdrehung zwischen Gehäuse und Griffhülse ausübt, wodurch diese Drehung gedämpft wird. Dies geschieht analog für beide möglichen Drehrichtungen.

Zur einfachen Lagerung der Dämpfungseinrichtung ist diese zwischen einem vom Gehäuse im wesentlichen radial abstehenden Ringflansch und einem an einem ersten Ende der Griffhülse ausgebildeten, zum Ringflansch offenen Ringraum angeordnet. Dadurch ergibt sich eine durch Ringflansch und Ringraum begrenzte Aufnahme für die Dämpfungseinrichtung.

Um die Dämpfungseinrichtung in einfacher Weise zwischen Ringflansch und Ringraum zu lokalisieren, weist der Ringflansch einen dem Ringraum zuweisenden und zumindest teilweise in diesem anordbaren Stufenabsatz auf. Dieser bildet ein Hindernis für die Dämpfungseinrichtung, durch welches die Dämpfungseinrichtung in axialer Richtung festgelegt ist.

Um den Ringraum in einfacher Weise und direkt benachbart zur Außenseite des Gehäuses zu bilden, erweist es sich als günstig, wenn der Ringraum durch ein von der Außenseite des Gehäuses radial beabstandeten Endabschnitts der Griffhülse gebildet ist.

Um in diesem Zusammenhang eine glatte Außenseite des Werkzeugs zu schaffen und gleichzeitig die Dämpfungseinrichtung vor Beschädigung und Verschmutzung zu schützen, ist es weiterhin von Vorteil, wenn ein freies Ende des Endabschnitts radial beabstandet zum Stufenabsatz endet und fluchtend zum Außenende des Ringflansches verläuft.

Durch die fluchtende Anordnung vom Außenende des Ringflansches und freiem Ende des Endabschnitts ist die Ausführung des Werkzeugs relativ glatt und weist weniger Kanten auf.

Zur einfachen Anordnung auch mehrer Dämpfungseinrichten weisen Ringraum und Stufenabsatz wenigstens drei in Umfangsrichtung beabstandete, in radialer Richtung zum Gehäuse bzw. zur Griffhülse und in axialer Richtung offene Nuten zur Aufnahme von jeweils einer Dämpfungseinrichtung auf. Die Dämpfungseinrichtung wird dabei durch die jeweils einander zugeordneten Nuten von Gehäuse und Griffhülse gehalten.

Bei einem einfachen Ausführungsbeispiel sind die Nuten gleich lang und/oder gleich beabstandet. Vorzugsweise beträgt eine entsprechende Nutlänge und ein entsprechender Nutabstand bezogen auf einen Mittelpunktswinkel einer zylindrischen Griffhülse jeweils 60°.

Einfache Anlagekörper sind durch zwei Anlagekugeln gebildet, die von der Druckfeder in Richtung von Nutenden kraftbeaufschlagt werden. Die Anlagekugeln sind einfach in die zugehörigen Nuten einsetzbar, wobei die Nutenden eine an die Kugeln angepaßte Krümmung aufweisen können.

Das Gehäuse kann bei einem Ausführungsbeispiel der Erfindung an einem von der Griffhülse bedeckten Hinterende mittels eines Innengewindes auf einer Motorhülse aufschraubbar sein. Um die Griffhülse auf Motorhülse und Gehäuse zu halten, weist die Motorhülse an ihrem dem Gehäuse gegenüberliegenden Ende vorzugsweise einen radial abstehenden Endanschlag zur Anlage an eine hintere Endfläche der Griffhülse auf. Beim Verschrauben von Gehäuse und Motorhülse wird auf diese Weise die Griffhülse auf das Gehäuse und/oder auf die Motorhülse aufgeschoben. Dabei kann die Griffhülse zwischen Endanschlag der Motorhülse und Hinterende des Gehäuses mit Axialspiel gehalten werden.

Um bei zwei einander zugeordneten Nuten von Gehäuse und in Griffhülse die Anlagekugeln mit allen Nutenden in Anlage zu bringen und gleichzeitig die Nuten jeweils in Gehäuse und Griffhülse gleichartig auszubilden, ist es von Vorteil, wenn die Nuten im Stufenabsatz und in der Griffhülse jeweils in radialer und axialer Richtung im wesentlichen gleich tief sind. Bei einem Ausführungsbeispiel der Erfindung können die Nuten im Stufenabsatz und in der Griffhülse beispielsweise in axialer Richtung benachbart zueinander angeordnet sein, wobei die Anlagekugeln in axialer Richtung in beide Nuten eingreifen und mit den entsprechenden Nutenden in Anlage sind. In radialer Richtung können die Kugeln vollständig von den entsprechenden Nuten aufgenommen sein. Bei einem anderen Ausführungsbeispiel liegen sich die Nuten in Griffhülse und Gehäuse in radialer Richtung gegenüber, wobei die Kugeln in radialer Richtung in beide Nuten hineinragen und mit entsprechenden Nutenden in Anlage sind.

Um eine ausreichende Anlage mit den Nutenden sowohl der Nut im Gehäuse als auch in der Griffhülse zu gewährleisten, ist es in diesem Zusammenhang günstig, wenn die Nuttiefe in radialer Richtung im wesentlichen gleich dem Radius der Anlagekugel ist.

Um die Kugeln und die Druckfeder in einfacher Weise in beispielsweise nur in den Nuten der Griffhülse bereits zu halten und dadurch den Zusammenbau von Gehäuse und Griffhülse zu vereinfachen, ist zum Zurückhalten von Kugeln und Druckfedern vorzugsweise ein als Sprengring ausgebildeter Innenring eingesetzt, der von einer Innenseite des Endabschnittes im Ringraum der Griffhülse absteht und die Nuten in axialer Richtung abdeckt.

Griffhülse, Gehäuse und Anlagekugeln können aus Stahl oder einem anderen, passenden Material hergestellt sein.

Im folgenden wird ein vorteilhaftes Ausführungsbeispiel der Erfindung anhand der in der Zeichnung beigefügten Figuren näher erläutert und beschrieben.

### Es zeigen:

- Fig. 1: einen Längsschnitt durch ein erfindungsgemäßes Werkzeug in vereinfachter Darstellung;
- Fig. 2: ein Gehäuse gemäß Fig. 1;
- Fig. 3: eine Griffhülse gemäß Fig. 1; und
- Fig. 4: einen Schnitt entlang der Linie IV-IV aus Fig. 1.

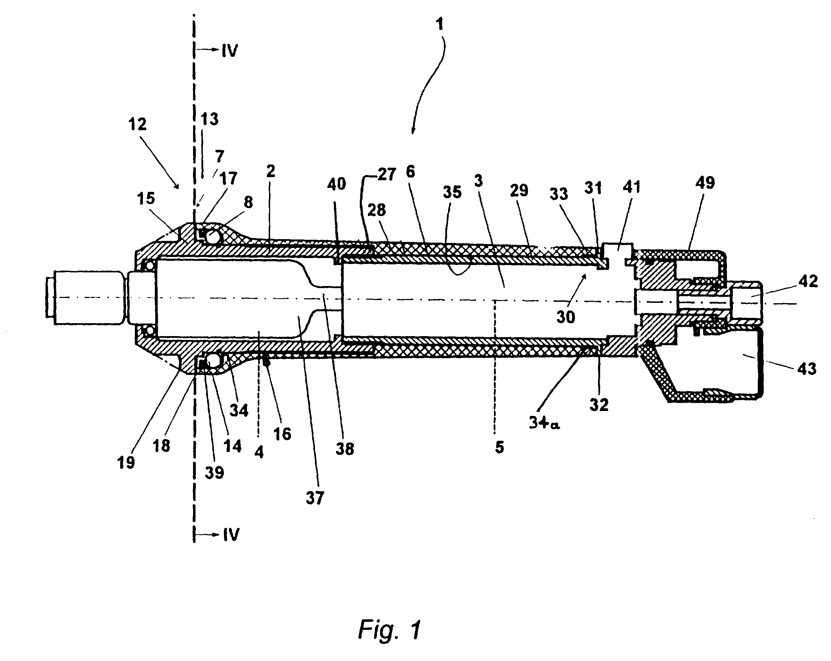

In dem Längsschnitt durch Werkzeug 1 nach Fig. 1 weist dieses ein Gehäuse 2, eine Motorhülse 29 und eine diese umgebende Griffhülse 6 auf.

Innerhalb des Gehäuses 2 ist eine Impulseinheit 37 mit einer in dieser angeordneten Abtriebswelle 4 drehbar gelagert. An einem aus dem Gehäuse 2 vorstehenden Ende der Abtriebswelle 4 ist ein Schraubkopf zum Anschrauben und Lösen von Schrauben oder Muttern ausgebildet. An dem Schraubkopf gegenüberliegendem Ende ist die Impulseinheit 37 mittels einer Steckverbindung 38 mit einem Motor 3 drehverbunden.

Innerhalb der Motorhülse 29 ist der Motor 3 angeordnet, der sich in etwa bis zu einer Schalttaste 41 zur Änderung der Drehrichtung des Motors erstreckt. An einem dem Schraubkopf gegenüberliegenden Ende des Werkzeugs 1 ist eine Verkleidung 49 auf die Motorhülse 29 aufgesteckt und an dieser befestigt, wobei in der Verkleidung ein Zuluftanschluß 42 und ein Abluftanschluß 43 ausgebildet sind. Der Zuluftanschluß 42 dient zur Zufuhr von Druckluft zum durch Druckluft betriebenen Motor 3.

Gehäuse 2, Griffhülse 6 und Motorhülse 29 sind im wesentlichen rotationssymmetrisch zur Werkzeug- oder Gehäuselängsachse 5 ausgebildet. Im Gehäuse 2 ist an dessem dem Schraubkopf zuweisenden Ende die Impulseinheit 37 drehbar gelagert. Von der Außenseite 16 des Gehäuses 2 steht beabstandet zum Schraubkopt ein Ringflansch 12 radial nach außen ab. Dieser weist ein Außenende 19 auf, das zum Teil schräg nach unten in Richtung Schraubkopf verläuft. Einem parallel zur Längsachse 5 verlaufenden Abschnitt des Außenendes 19 ist ein Endabschnitt 17 der Griffhülse 6 zugeordnet. Dieser ist fluchtend zum Außenende 19 angeordnet, wobei dessen freies Ende 18 eng benachbart zum Ringflansch 12 angeordnet ist. Der Endabschnitt 17 erstreckt sich in seinem direkt an den Ringflansch 12 anschließenden Abschnitt im wesentlichen parallel zur Längsachse 5 und verläuft anschließend gekrümmt in Richtung Gehäuse 2.

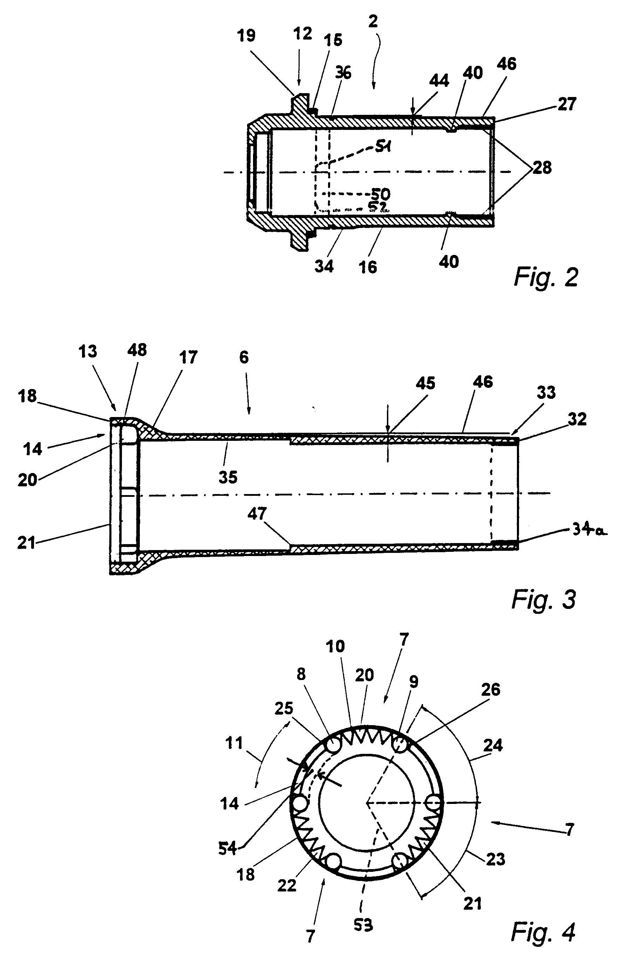

Zwischen Endabschnitt 17 und Gehäuse 2 bzw. Ringflansch 12 ist ein Ringraum 14 gebildet. In diesem ist wenigstens eine Dämpfungseinrichtung 7 angeordnet, von welcher in Fig. 1 eine Kugel 8 als Anlagekörper sichtbar ist. Die Dämpfungseinrichtung 7 wird im Zusammenhang mit Fig. 4 näher beschrieben.

Der Ringflansch 12 weist einen Stufenabsatz 15 auf, der in den Ringraum 14 eingreift. Zwischen diesem und Endabschnitt 17 ist ein Innenring 39 angeordnet.

Die Griffhülse 6 erstreckt sich von ihrem ersten durch Endabschnitt 17 gebildeten Ende 13 bis zum zweiten Ende 33, wobei die Griffhülse 6 in Richtung zum zweiten Ende 33 konvergiert, siehe insbesondere Fig. 3.

An ihrem zweiten Ende 33 ist die Griffhülse 6 mit einer an diesem Ende gebildeten Endfläche 32 mit einem am hinteren Ende 30 der Motorhülse 29 radial nach außen abstehendem Endanschlag 31 in Anlage. Die Höhe des Endanschlags 31 entspricht der Dicke der Griffhülse 6 an ihrem zweiten Ende 33. Weiterhin ist die Griffhülse 6 mit einem Hinterende 27 des Gehäuses 2 über eine Innenstufe 47, siehe Fig. 3, in Anlage.

Das Gehäuse 2 weist an seinem Hinterende 27 ein Innengewinde 28 auf, mit dem es auf ein entsprechendes Außengewinde der Motorhülse 29 aufgeschraubt ist. Im aufgeschraubten Zustand ist ein radial nach innen abstehender Innenabsatz 40 mit einem Vorderende der Motorhülse 29 in Anlage.

Die Innenseite 35 der Griffhülse 6 ist von der Außenseite 16 des Gehäuses 2 unter Einschluß eines spaltförmigen Freiraums beabstandet. Dieser erstreckt sich von einem radial aus der Außenseite 16 vorstehendem Lagerring 34 bis zum Hinterende 27 des Gehäuses 2. Der Lagerring 34 ist in unmittelbarer Nachbarschaft zum Ringraum 14 in der Außenseite 16 des Gehäuses 2 ausgebildet. Ein analoger Lagerring 34a ist am Ende 33 der Griffhülse 6 ausgebildet und mit der Motorhülse 29 von außen in Anlage.

In Fig. 2 ist das Gehäuse 2 aus Fig. 1 allein dargestellt. Gleiche Bezugszeichen kennzeichnen gleiche Teile und werden nur noch teilweise erwähnt.

An der Außenseite 16 weist das Gehäuse 2 in dem Stufenabsatz 15 ausgebildete Nuten 50 auf, die sich bis zu einer umlaufenden Ringnut 36 in axialer Richtung erstrecken. Die Nuten sind in Umfangsrichtung durch Nutenden 51 und 52 entsprechend begrenzt. Direkt anschließend an die Ringnut 36 ist der Lagerring 34 ausgebildet. An diesen schließt sich ein um einen Abstand 44 nach innen versetzter, sich bis zum Hinterende 27 erstreckender Abschnitt an. In diesem ist ein Außendurchmesser des Gehäuses 2 gegenüber einem Außendurchmesser im Bereich des Lagerrings 34 um den Abstand 44 geringer. Die Außenseite 16 verläuft in dem Bereich mit geringerem Außendurchmesser im wesentlichen parallel zu einer Horizontalen 46.

Das Gehäuse 2 weist benachbart zu seinem Hinterende 27 ein Innengewinde 28 auf, das sich in das Gehäuse 2 bis zu einem Innenabsatz 40 erstreckt.

In Fig. 3 ist die Griffhülse 6 aus Fig. 1 allein dargestellt.

An dem ersten Ende 13 der Griffhülse 6 ist der Endabschnitt 17 ausgebildet, auf dessen Innenseite der Ringraum 14 gebildet ist. In dem Ringraum sind Nuten 22, 21 angeordnet, die eine Innenkrümmung 48 entsprechend zur Krümmung der Kugel 8, siehe Fig. 1, aufweisen.

Auf der Innenseite 35 der Griffhülse 6 ist eine Innenstufe 47 angeordnet, die bei auf Gehäuse 2 aufgeschobener Griffhülse 6 mit derem Hinterende 27 in Anlage ist. An seinem zweiten Ende 33 weist die Griffhülse 6 eine Endfläche 32 auf, die bei zusammengesetztem Werkzeug 1 mit dem Endanschlag 31 der Motorhülse 29, siehe Fig. 1, in Anlage ist.

Die Griffhülse 6 verläuft vom Endabschnitt 17 konvergierend zum zweiten Ende 33, wobei ein Abstand 45 zwischen Außenseite der Griffhülse 6 und der Horizontalen 46 zunimmt. Am Ende 33 ist auf der Innenseite 35 ein radial vorstehender Lagerring 34a ausgebildet.

In Fig. 4 ist ein Schnitt entlang der Linie IV-IV aus Fig. 1 dargestellt. Innerhalb des Ringraums 14 sind drei Dämpfungseinrichtungen 7 angeordnet. Diese sind jeweils aus zwei Kugeln 8 und 9 als Anlagekörper und einer zwischen diesen angeordneten Druckfeder 10 gebildet. Jede Dämpfungseinrichtung 7 ist in einer Nut 20, 21, 22 und 50 angeordnet. Mit entsprechenden Nutenden 25, 26 bzw. 51, 52 einer jeden Nut sind die Kugeln 8, 9 in Anlage.

Die Dämpfungseinrichtungen 7 erstrecken sich in Umfangsrichtung 11 der Griffhülse 6 bzw. des Gehäuses 2. Die Länge einer jeden Dämpfungseinrichtung bzw. Nut bezogen auf die Mittelpunkte der entsprechenden Kugeln entspricht einem Mittelpunktswinkel 23 von 60°. Der zugehörige Mittelpunkt wird durch die Längsachse 5 nach Fig. 1 gebildet.

Der entsprechende Abstand zweier Dämpfungseinrichtungen 7, wiederum bezogen auf die Mittelpunkte der Kugeln, weist ebenfalls einen Mittelpunktswinkel 24 von 60° auf. Die Längen der Dämpfungseinrichtungen 7 in Umfangsrichtung und die Abstände zwischen diesen sind folglich jeweils gleich. Um einen Überstand 54 stehen die Kugeln 8, 9 aus den Nuten 20, 21 und 22 der Griffhülse 6 in radialer Richtung 53 vor. Dieser vorstehende Teil der Kugel ist vor den Nuten 50 des Gehäuses 2 aufgenommen. Folglich bilden beide Nuten 20, 21, 22 und 50 zusammen eine sich über eine Länge 24 in Umfangsrichtung 11 erstreckende Aufnahme für eine Dämpfungseinrichtung 7.

Im folgenden wird die Funktionsweise des erfindungsgemäßen Werkzeugs kurz anhand der Figuren beschrieben.

Wird pulsartig eine Relativbewegung oder eine Vibration in Drehrichtung vom Gehäuse auf die Griffhülse 6 übertragen, wird die in Drehrichtung erste Kugel einer Dämpfungseinrichtung vom zugehörigen Nutende der Gehäusenut in Drehrichtung mitbewegt. Die zweite Kugel der entsprechenden Dämpfungseinrichtung bleibt mit dem Nutende der Griffhülsennut in Anlage und folglich wird die Druckfeder zusammengedrückt. Auf diese Weise wird eine Kraft entgegengesetzt zur Drehrichtung ausgeübt, die die pulsartige Relativdrehung bzw. die Vibrationen in Drehrichtungen dämpft. Dies gilt analog für beide Drehrichtungen und jedes zugeordnete Nutpaar in Gehäuse und Griffhülse.

## Patentansprüche

1. Werkzeug (1), insbesondere Impulsschrauber, mit einer in einem Gehäuse (2) drehbar gelagerten, von einen Motor (3) angetriebenen Abtriebewelle (4), welche in wesentlichen koaxial zu einer Gehäuselängsachse (5) verläuft, **dadurch gekennzeichnet**, daß auf das Gehäuse (2) eine relativ zu diesem drehbare Griffhülse (6) aufgesteckt und zwischen diesen wenigstens eine einer pulsartigen Relativdrehung von Griffhülse (6) zu Gehäuse (2) entgegenwirkende Dämpfungseinrichtung (7) angeordnet ist.

2. Werkzeug nach Anspruch 1, **dadurch gekennzeichnet**, daß die Dämpfungseinrichtung (7) wenigstens eine zwischen Gehäuse (2) und Griffhülse (6) festgelegte Druckfeder (10) aufweist.

3. Werkzeug nach Anspruch 1 oder 2, **dadurch gekennzeichnet**, daß die Dämpfungseinrichtung (7) zwei von Enden der Druckfeder (10) beaufschlagte Anlagekörper (8,9) aufweist, welche in Umfangsrichtung (11) von Gehäuse (2) und Griffhülse (6) hintereinander angeordnet und mit diesen (2, 6) in Anlage sind.

4. Werkzeug nach wenigstens einem der vorangehenden Ansprüche, **dadurch gekennzeichnet**, daß die Dämpfungseinrichtung (7) zwischen einem vom Gehäuse (2) im wesentlichen radial abstehenden Ringflansch (12) und einem an einen ersten Ende (13) der Griffhülse (6) ausgebildeten, zum Ringflansch (12) offenen Ringraum (14) angeordnet ist.

5. Werkzeug nach Anspruch 4, **dadurch gekennzeichnet**, daß der Ringflansch (12) einen den Ringraum (14) zuweisenden und zumindest teilweise in diesem anordbaren Stutenabsatz (15) aufweist.

6. Werkzeug nach wenigstens einem der Ansprüche 4 oder 5, **dadurch gekennzeichnet**, daß der Ringraum (14) durch ein von der Außenseite (16) des Gehäuses (2) radial beabstandeten Endabschnitt (17) der Griffhülse (6) gebildet ist.

7. Werkzeug nach Anspruch 6, **dadurch gekennzeichnet**, daß ein freies Ende (18) des Endabschnitts (17) radial beabstandet zum Stufenabsatz (15) endet und fluchtend zum Außenende (19) des Ringflansches (12) verläuft.

8. Werkzeug nach wenigstens einem der Ansprüche 5 bis 7, **dadurch gekennzeichnet**, daß Ringraum (14) und Stufenabsatz (15) wenigstens drei in Umfangsrichtung (11) beabstandete, in radialer Richtung (53) zum Gehäuse (2) bzw. zur Griffhülse (6) und in axialer Richtung (5) offene Nuten (20,21,22,50) zur Aufnahme von jeweils einer Dämpfungseinrichtung (7) aufweisen.

9. Werkzeug nach Anspruch 8, **dadurch gekennzeichnet**, daß die Nuten (20,21,22,50) gleich lang und/oder gleich beabstandet sind.

10. Werkzeug nach wenigstens einem der Ansprüche 3 bis 9, **dadurch gekennzeichnet**, daß die Anlagekörper (8,9) zwei Anlagekugeln sind, die von der Druckfeder (10) in Richtung von Nutenden (25,26,51,52) kraftbeaufschlagt sind.

11. Werkzeug nach wenigstens einem der vorangehenden Ansprüche, **dadurch gekennzeichnet**, daß das Gehäuse (2) an einem von der Griffhülse (6) bedeckten Hinterende (27) mittels eines Innengewindes (28) auf einer Motorhülse (29) aufgeschraubt ist, welche an ihrem dem Gehäuse (2) gegenüberliegenden Ende (30) einen radial abstehenden Endanschlag (31) zur Anlage an eine hintere Endfläche (32) der Griffhülse (6) aufweist.

12. Werkzeug nach wenigstens einem der Ansprüche 5 bis 11, **dadurch gekennzeichnet**, daß das Gehäuse (2) auf seiner Außenseite (16) benachbart zum Stufenabsatz (15) einen radial vorstehenden Lagerring (34) aufweist, an dem die Griffhülse (6) mit ihrer Innenseite (35) anliegt.

13. Werkzeug nach wenigstens einem der Ansprüche 8 bis 12, **dadurch gekennzeichnet**, daß die Nuten (20, 21, 50) im Stufenabsatz (15) und in der Griffhülse (6) jeweils in radialer und axialer Richtung (53,5) im wesentlichen gleich tief sind.

14. Werkzeug nach wenigstens einem der Ansprüche 10 bis 13, **dadurch gekennzeichnet**, daß die Nuttiefe (54) in radialer Richtung (53) im wesentlichen gleich dem Radius einer Anlagekugel (8,9) ist.

15. Werkzeug nach wenigstens einem der Ansprüche 10 bis 14, **dadurch gekennzeichnet**, daß zum Zurückhalten von Anlagekugeln (8,9) und Druckfeder (10) in den Nuten (20, 21, 22) der Griffhülse (6) diese Nuten von einem in den Ringraum (40) eingesetzten Innenring (39) in axialer Richtung (5) abgedeckt sind.

## Claims

1. A tool (1), in particular a power screw driver, comprising an output shaft (4) which is rotatably mounted in a housing (2) and is driven by a motor (3) and which extends substantially coaxially to a longitudinal axis (5) of said housing, **characterized in** that a grip sleeve (6) which is rotatable relative to said housing (2) is fitted over said housing (2), and at least one damping device (7) that counteracts a pulse-like rotation of said grip sleeve (6) relative to said housing (2) is disposed between said housing (2) and said grip sleeve (6).

2. A tool according to claim 1, **characterized in** that said damping device (7) comprises at least one compression spring (10) fixed between housing (2) and grip sleeve (6).

3. A tool according to claim 1 or 2, **characterized in** that said damping device (7) comprises two abutment bodies (8, 9) which are acted upon by ends of said compression spring (10) and which are arranged one after the other in the circumferential direction (11) of housing (2) and grip sleeve (6) and are in contact with said members (2, 6).

4. A tool according to at least one of the preceding claims, **characterized in** that said damping device (7) is arranged between an annular flange (12) projecting substantially radially from said housing (2), and an annular chamber (14) which is formed at a first end (13) of said grip sleeve (6) and is open towards said annular flange (12).

5. A tool according to claim 4, **characterized in** that said annular flange (12) has a stepped portion (15) which is oriented towards said annular chamber (14) and can be arranged at least in part in said chamber.

6. A tool according to at least one of claims 4 or 5, **characterized in** that said annular chamber (14) is formed by an end section (17) of said grip sleeve (6) which is radially spaced apart from the outside (16) of said housing (2).

7. A tool according to claim 6, **characterized in** that a free end (18) of said end section (17) ends in radially spaced-apart relationship with said stepped portion (15) and extends in alignment with the outer end (19) of said annular flange (12).

8. A tool according to at least one of claims 5 to 7, **characterized in** that annular chamber (14) and stepped portion (15) comprise at least three circumferentially (11) spaced-apart grooves (20, 21, 22, 50) for receiving a respective damping device (7), said grooves being open in radial direction (53) towards said housing (2) and said grip sleeve (6), respectively, and in the axial direction (5).

9. A tool according to claim 8, **characterized in** that said grooves (20, 21, 22, 50) are of equal length and/or are equally spaced apart.

10. A tool according to at least one of claims 3 to 9, **characterized** in that said abutment bodies (8, 9) are two abutment balls which are force-actuated by said compression spring (10) towards groove ends (25, 26, 51, 52).

11. A tool according to at least one of the preceding claims, **characterized in** that at a rear end (27) covered by said grip sleeve (6), said housing (2) is screwed by means of an inner thread (28) to a motor sleeve (29) which at its end (30) opposite to said housing (2) comprises a radially projecting end stop (31) for abutment on a rear end face (32) of said grip sleeve (6).

12. A tool according to at least one of claims 5 to 11, **characterized in** that at its outside (16) said housing (2) is provided in the vicinity of said stepped portion (15) with a radially projecting bearing ring (34) at which said grip sleeve (6) rests with its inside (35).

13. A tool according to at least one of claims 10 to 12, **characterized in** that said grooves (20, 21, 50) in said stepped portion (15) and in said grip sleeve (6) have each substantially the same depth in radial and axial directions (53, 5).

14. A tool according to at least one of claims 10 to 13, **characterized in** that the groove depth (54) in radial direction (53) is substantially identical with the radius of an abutment ball (8, 9).

15. A tool according to at least one of claims 10 to 14, **characterized in** that for the purpose of retaining abutment balls (8, 9) and compression spring (10) in the grooves (20, 21, 22) of said grip sleeve (6), said grooves are covered in axial direction (5) by an inner ring (39) which is inserted into said annular chamber (14).

## Revendications

1. Outil (1), en particulier, visseuse à impulsions, comprenant un arbre de sortie (4) entraîné par un moteur (3), arbre qui est monté rotatif dans un boîtier (2) et qui s'étend pratiquement coaxialement à un axe longitudinal (5) du boîtier, caractérisé en ce que sur le boîtier (2), est emboîté un manchon de poignée (6) qui peut tourner par rapport à ce boîtier et qu'entre ces deux éléments est disposé au moins un dispositif amortisseur (7) qui combat une rotation relative pulsatoire du manchon de poignée (6) par rapport au boîtier (2).

2. Outil selon la revendication 1, caractérisé en ce que le dispositif amortisseur (7) présente au moins un ressort de compression (10) maintenu entre le boîtier (2) et le manchon de poignée (6).

3. Outil selon la revendication 1 ou 2, caractérisé en ce que le dispositif amortisseur (7) présente deux corps d'appui (8, 9) sollicités par des extrémités du ressort de compression (10), et qui sont disposés l'un à la suite de l'autre dans la direction circonférentielle (11) du boîtier (2) et du manchon de poignée (6) et en appui contre ces derniers (2, 6).

4. Outil selon au moins une des revendications précédentes, caractérisé en ce que le dispositif amortisseur (7) est disposé entre une collerette annulaire (12) qui fait saillie sensiblement radialement sur le boîtier (2), et une chambre annulaire (14) formée à une première extrémité (13) du manchon de poignée (6) et qui est ouverte vers la collerette annulaire (12).

5. Outil selon la revendication 4, caractérisé en ce que la collerette annulaire (12) présente un épaulement (15) dirigé vers la chambre annulaire (14) et qui peut être au moins partiellement logé dans cette dernière.

6. Outil selon au moins une des revendications 4 ou 5, caractérisé en ce que la chambre annulaire (14) est formée par un segment terminal (17) du manchon de poignée (6) qui est espacé radialement de la face extérieure (16) du boîtier (2).

7. Outil selon la revendication 6, caractérisé en ce qu'une extrémité libre (18) du segment terminal (17) se termine à une certaine distance radiale de l'épaulement (15) et s'étend dans l'alignement de l'extrémité extérieure (19) de la collerette annulaire (12).

8. Outil selon au moins une des revendications 5 à 7, caractérisé en ce que la chambre annulaire (14) et l'épaulement (15) présentent au moins trois gorges (20, 21, 22, 50) espacées dans la direction circonférentielle (11) ouvertes vers le boîtier (2) dans la direction radiale (53) respectivement et vers le manchon de poignée (6) et ouvertes dans la direction axiale (5), pour loger chacune un dispositif amortisseur (7).

9. Outil selon la revendication 8, caractérisé en ce que les gorges (20, 21, 22, 50) sont de même longueur et/ou espacées de distance égales.

10. Outil selon au moins une des revendications 3 à 9, caractérisé en ce que les corps d'appui (8, 9) sont deux billes d'appui qui sont sollicitées par action de force en direction des extrémités (25, 26, 51, 52) des gorges par le ressort de compression (10).

11. Outil selon au moins une des revendications précédentes, caractérisé en ce qu'à une extrémité arrière (27) recouverte par le manchon de poignée (6), le boîtier (2) est vissé, au moyen d'un filetage intérieur (28) sur un manchon de moteur (29), qui présente, à son extrémité (30) qui est à l'opposé du boîtier (2), une butée terminale (31) en saillie radiale destinée à s'appuyer contre une surface terminale arrière (32) du manchon de poignée (6).

12. Outil selon au moins une des revendications 5 à 11, caractérisé en ce que le boîtier (2) présente sur sa face extérieure (16), dans une position adjacente à l'épaulement (15), une bague de palier (34) faisant saillie radialement, sur laquelle le manchon de poignée (6) est appuyé par sa face intérieure (35).

13. Outil selon au moins une des revendications 8 à 12, caractérisé en ce que les gorges (20, 21, 50) ménagées dans l'épaulement (15) et dans le manchon de poignée (6) sont pratiquement de même profondeur dans la direction radiale et dans la direction axiale (53, 5).

14. Outil selon au moins une des revendications 10 à 13,; caractérisé en ce que la profondeur (54) des gorges dans la direction radiale (53) est pratiquement égale au rayon d'une bille d'appui (8, 9).

15. Outil selon au moins une des revendications 10 à 14, caractérisé en ce que, pour retenir les billes d'appui (8, 9) et le ressort de compression (10) dans les gorges (20, 21, 22) du manchon de poignée (6), ces gorges sont recouvertes dans la direction axiale (5) par une bague intérieure (39) placée dans la chambre annulaire (14).
